(19) Europäisches Patentamt

European Patent Office

Office européen des brevets

(11) EP 1 161 475 B1

## (12) EUROPEAN PATENT SPECIFICATION

(45) Date of publication and mention
of the grant of the patent:
**24.03.2004 Bulletin 2004/13**

(21) Application number: **00922485.8**

(22) Date of filing: **24.02.2000**

(51) Int Cl.⁷: **C08G 18/48**, B29C 33/60

(86) International application number:
**PCT/EP2000/001514**

(87) International publication number:
**WO 2000/055232 (21.09.2000 Gazette 2000/38)**

(54) **PROCESS FOR PREPARING MOULDED POLYURETHANE MATERIAL**

VERFAHREN ZUR HERSTELLUNG VON POLYURETHANFORMMASSEN

PROCEDE DE PREPARATION DE MATERIAU POLYURETHANNE MOULE

(84) Designated Contracting States:
**AT BE CH CY DE DK ES FI FR GB GR IE IT LI LU
MC NL PT SE**
Designated Extension States:
**SI**

(30) Priority: **17.03.1999 EP 99105419**

(43) Date of publication of application:
**12.12.2001 Bulletin 2001/50**

(73) Proprietor: **HUNTSMAN INTERNATIONAL LLC
Salt Lake City, Utah 84108 (US)**

(72) Inventors:
• **BLEYS, Gerhard, Jozef
B-3001 Heverlee (BE)**
• **HUYGENS, Eric
B-3001 Heverlee (BE)**
• **LEENSLAG, Jan-Willem
B-3120 Tremelo (BE)**
• **MOUREAU, Herman, Eugene, Germain
B-3300 Tienen (BE)**

(74) Representative:
**Baken, Philippus Johannes Leonardus Henricus
HUNTSMAN (EUROPE) BVBA,
Intellectual Property Department,
Everslaan 45
3078 Everberg (BE)**

(56) References cited:
| EP-A- 0 180 749 | EP-A- 0 416 399 |
| EP-A- 0 547 760 | WO-A-97/21750 |
| WO-A-98/00450 | |

## Description

The present invention is concerned with a process for preparing moulded polyurethane materials, in particular foams made from a considerable amount of a polyol having a relatively high oxyethylene (EO) content.

EP 547765 discloses the preparation of flexible foams using a considerable amount of a polyether polyol containing a considerable amount of oxyethylene groups. In general terms the making of mouldings has been disclosed.

WO 97/21750 discloses the preparation of moulded elastomers using the same type of polyols in high amount.

US 5700847 and US 5668191 disclose the preparation of moulded flexible foams as well.

None of these citations touches upon a problem encountered in making such moulded foams commercially. Commercially such foams are made using moulds which have been treated before use : the surfaces, which will be in contact with the ingredients used for preparing the polyurethane material and/or with the finished polyurethane material, are provided with one or more so-called external mould release agents. After having made 5 or 6 mouldings these surfaces need to be provided with an external mould release agent again. In most cases the application of this external mould release agent onto said surfaces is conducted manually; whether it is conducted manually or automatically, this repetitive application of external mould release agent increases the cycle time and the amount of external mould release agent used. Further it has been experienced in practice that the external mould release agent during the moulding process is concentrated at certain parts of the surface of the mould (so called 'build-up'), which requires thorough cleaning of the surface regularly.

EP 547760 discloses a process for making moulded elastomers; more than 100 mouldings could be done without applying external mould release agent. The reaction systems used comprise allophanate-modified polyisocyanate and a considerable amount of a polyether polyol having a relatively high oxypropylene content.

Many disclosures have been made in the past to improve demoulding by using an internal mould release agent; see e.g. EP 119471 and EP 173888 and the prior art discussed therein.

It would be advantageous to be able to make moulded flexible polyurethane foams without the need to apply external mould release agent as often as nowadays. Further it would be advantageous to reduce the total amount of external mould release agent used when making mouldings and to reduce the build-up.

Surprisingly, we have found that it is possible to reduce the number of times external mould release agent needs to be applied, the total amount of external mould release agent used in the moulding process and the build-up by using a substantial amount of a polyol having a substantial amount of oxyethylene groups in preparing the moulded material.

Therefore the present invention is concerned with a process for preparing a polyurethane material in a mould in which process the following steps are conducted :

1. an external mould release agent is applied onto at least those surfaces of the mould which will be in contact with the ingredients used for preparing the polyurethane material and/or the finished polyurethane material;

2. the ingredients to be used for preparing the polyurethane material are fed into the mould;

3. the ingredients are allowed to react and to form the polyurethane material;

4. the polyurethane material so formed is removed from the mould and

5. steps 2,3 and 4 are repeated at least 10 times without repeating step 1, wherein at least 25% by weight of the ingredients used to make the polyurethane material, excluding water in this calculation if used, consist of polyether polyol having an average nominal functionality of 2-6, an average equivalent weight of 500-5000 and an oxyethylene content of at least 50% by weight.

In the context of the present invention the following terms have the following meaning :

1) isocyanate index or NCO index or index :
the ratio of NCO-groups over isocyanate-reactive hydrogen atoms present in a formulation, given as a percentage :

$$\frac{[NCO] \times 100}{[active\ hydrogen\ ]}\ (\%).$$

In other words the NCO-index expresses the percentage of isocyanate actually used in a formulation with respect to the amount of isocyanate theoretically required for reacting with the amount of isocyanate-reactive hydrogen used in a formulation.

It should be observed that the isocyanate index as used herein is considered from the point of view of the actual foaming process or other process in the mould involving the isocyanate ingredients and the isocyanate-reactive ingredients. Any isocyanate groups consumed in a preliminary step to produce modified polyisocyanates (including such isocyanate-derivatives referred to in the art as prepolymers) or any active hydrogens consumed in a preliminary step (e.g. reacted with isocyanate to produce modified polyols or polyamines) are not taken into account in the calculation of the isocyanate index. Only the free isocyanate groups and the free isocyanate-reactive hydrogens (including those of the water) present at the actual reaction in the mould are taken into account.

2) The expression "isocyanate-reactive hydrogen atoms" as used herein for the purpose of calculating the isocyanate index refers to the total of active hydrogen atoms in hydroxyl and amine groups present in the reactive compositions; this means that for the purpose of calculating the isocyanate index at the actual foaming process one hydroxyl group is considered to comprise one reactive hydrogen, one primary amine group is considered to comprise one reactive hydrogen and one water molecule is considered to comprise two active hydrogens.

3) Reaction system : a combination of components wherein the polyisocyanates are kept in one or more containers separate from the isocyanate-reactive components.

4) The expression "polyurethane foam" as used herein refers to cellular products as obtained by reacting polyisocyanates with isocyanate-reactive hydrogen containing compounds, using foaming agents, and in particular includes cellular products obtained with water as reactive foaming agent (involving a reaction of water with isocyanate groups yielding urea linkages and carbon dioxide and producing polyurea-urethane foams) and with polyols, aminoalcohols and/or polyamines as isocyanate-reactive compounds.

5) The term "nominal hydroxyl functionality" is used herein to indicate the functionality (number of hydroxyl groups per molecule) of the polyol or polyol composition on the assumption that this is the functionality (number of active hydrogen atoms per molecule) of the initiator(s) used in their preparation although in practice it will often be somewhat less because of some terminal unsaturation.

6) The word "average" refers to number average unless indicated otherwise.

The polyurethane material made according to the process of the present invention may be an elastomer, a microcellular elastomer, a thermoplastic polyurethane, an integral skin semi-rigid foam, a flexible foam or a hydrophilic foam like those of the type disclosed in EP 707607 and EP 793681. The materials made e.g. may be used as body parts in automobiles like steering wheels, arm-rests and head-rests, as shoe soles, as the foam material in automotive seating or furniture, in medical and hygienic applications like wound dressing, tampons and diapers, and in leisure products like dolls. The materials obtained have comparable physical properties irrespective of whether the material is obtained after steps 2,3 and 4 have been conducted once, 10 times, 25 times, 40 times or even more.

The moulding process may be conducted in an open mould and in a closed mould; preferably the reaction takes place in a closed mould. When the moulding process is conducted in a closed mould, the mould may be closed after step 2, and opened after step 3 or the mould may be closed after step 1 and opened after step 3; in the latter case the ingredients for making the polyurethane material are fed into the mould via appropriate inlets. The moulding may be conducted by processes known in the art like cast moulding and reaction injection moulding (RIM, including so-called structural RIM).

As said, step 2 - 4 are repeated at least 10 times without repeating step 1; preferably this is at least 15 times and most preferably at least 25 times. Although, it would be desirable that steps 2-4 could be repeated as many times as possible without repeating step 1, practice has shown that it may be desirable to repeat step 1, after steps 2-4 have been repeated a considerable number of times without repeating step 1. In general it can be said that step 1 is to be repeated when a substantial increase of the force needed to remove a moulded part is observed, compared to the force needed to remove the first moulded part, to such an extent that it is to be expected that the next demoulding can not be made without damaging the part. Those involved in demoulding on commercial production lines will be able easily to determine if and when step 1 is to be repeated. Although not yet needed because of deteriorating demoulding performance, it might nevertheless be desirable to repeat step 1 after a certain time period, in order to have a consistent production process. In that context it might be desirable to repeat step 1 between two shifts (of e. g. 8 hours), after 24 hours or after a week depending on the complexity of the mould. It is to be noted that an usual cycle time generally is between 0.5 and 20 minutes and often between 1 and 10 minutes. Practice has shown that for flexible foams such repetition of step 1 is not necessary before 50 mouldings have been made.

The ingredients used to make the polyurethane material are known in the art.

As said at least 25% by weight of the ingredients, excluding the amount of water if used, consist of a polyether polyol having a number average nominal functionality of 2-6, an oxyethylene group content of at least 50% by weight and preferably of 60-90% by weight (calculated on the weight of the polyether polyol) and a number average equivalent weight of 500-5000. The polyether polyol may contain, together with the oxyethylene groups, other oxyalkylene groups, like oxypropylene and oxybutylene groups.

When the polyether polyol contains other oxyalkylene groups the polyether polyol may be in the form of a block copolymer, a random copolymer or a combination of block- and random copolymer. Most preferably random copolymers are used. Polyoxyethylene polyols, like polyoxyethylene glycols having a molecular weight of 1000-2000, may be used as well.

The polyether polyol most preferably is a polyoxyethylene polyoxypropylene polyol having a number average nominal functionality of 2-4, a number average equivalent weight of 750-2500 and an oxyethylene content of 60-90% by weight; most preferably the polyoxyethylene polyoxypropylene polyol is a random polyol: such polyols are commercially available, examples being Daltocel™ 442 from Huntsman Polyurethanes (Daltocel is a trademark of Huntsman ICI Chemicals LLC), Arcol™ 2580 from Lyondell and CP1421 from DOW. Mixtures of these polyols having a high oxyethylene content may be used as well.

The amount of the above polyol calculated on all ingredients used, excluding the amount of water if used, preferably is 50-90% by weight and more preferably 60-85% by weight.

The other ingredients used in making the polyurethane materials are known as such and are polyisocyanates and, in case foamed polyurethane materials are made, blowing agents. Further the following ingredients may be used as optional ingredients: further isocyanate-reactive compounds like polyether polyols of a type different from those described above e.g. polyoxypropylene polyols optionally having less than 50% and preferably less than 25% by weight of oxyethylene groups at the end of the polymer chains (so called EO-tipped polyols), polyester polyols, polyether polyamines, these compounds having a number average nominal functionality of 2-6, preferably of 2-3 and a number average equivalent weight of 500-5000, preferably of 1000-3000, and like chain extenders and cross-linkers which are isocyanate-reactive compounds having an equivalent weight below 500 and a functionality of 2 and 3-8 respectively.

Examples of such chain-extenders and cross-linkers are ethylene glycol, propane diol, 2-methyl-propane-1,3 diol, butanediol, pentane diol, hexane diol, diethylene glycol, propylene glycol, dipropylene glycol, polyoxyethylene diols and triols having an equivalent weight below 500, glycerol, trimethylolpropane, pentaerythritol, sucrose, sorbitol. mono-. di- and triethanolamine, ethylenediamine, toluenediamine, diethyltoluene diamine and polyether diamines and triamines having an equivalent weight below 500.

Still further the following optional ingredients may be used: catalysts enhancing the formation of urethane bonds like metal catalysts like tin octoate and dibutyltin dilaurate, tertiary amine catalysts like triethylenediamine and imidazoles like dimethylimidazole and other catalysts like maleate esters and acetate esters; surfactants; fire retardants; smoke suppressants; UV-stabilizers; colorants; microbial inhibitors; fillers; internal mould release agents (such agents may be used to further enhance the release of the materials made but are not essential as shown in the Examples).

The polyols used in making the polyurethane materials and in particular the flexible foams may comprise dispersions or solutions of addition or condensation polymers.

Such modified polyols, often referred to as "polymer polyols", have been fully described in the prior art and include products obtained by the in situ polymerisation of one or more vinyl monomers, for example styrene and/or acrylonitrile, in the above polyether polyols, or by the in situ reaction between a polyisocyanate and an amino- and/or hydroxy-functional compound, such as triethanolamine, in the above polyol.

The amount of dispersed polymer may range from 0.1 to 10% by weight on all ingredients. Particle sizes of the dispersed polymer of less than 50 microns are preferred.

During the last years several methods have been described to prepare polyether polyols having a low level of unsaturation. These developments have made it possible to use polyether polyols at the higher end of the molecular weight range since such polyols can now be prepared with an acceptably low level of unsaturation. According to the present invention polyols having a low level of unsaturation may be used as well. In particular such high molecular weight polyols having a low level of unsaturation may be used for preparing flexible foams having a high ball rebound and resilience.

If a foamed polyurethane is made a blowing agent is used. Blowing agents known in the art may be used like hydrocarbons, so called CFC's and HCFC's, $N_2$, $CO_2$ and water. Most preferably water is used as the blowing agent, optionally together with $CO_2$. The amount of blowing agent will depend on the desired density. Those skilled in the art will be able to determine the amount depending on the desired density and the blowing agent used. When water is used the amount will be up to 4 times the weight of all other ingredients used. For a flexible foam used in car seating and furniture the amount of water will be between 0.8-5% by weight; for a microcellular elastomer and an integral skin semi-rigid foam in general up to 0.8% by weight will be used and for hydrophilic foams more than 5% by weight preferably 20-300% by weight will be used; all amounts calculated on the amount of all other ingredients used.

Polyisocyanates used for preparing the polyurethane materials may be selected from aliphatic, cycloaliphatic and araliphatic polyisocyanates, especially diisocyanates, like hexamethylene diisocyanate. isophorone diisocyanate, cyclohexane-1,4-diisocyanate, 4,4-dicyclohexylmethane diisocyanate and m- and p- tetramethylxylylene diisocyanate. and in particular aromatic polyisocyanates like toluene diisocyanates (TDI), phenylene diisocyanates, naphthalene diisocyanates and most preferably methylene diphenylene diisocyanates (MDI) and its homologues having an isocyanate functionality of more than two, like crude MDI and polymeric MDI.

Preferred polyisocyanates are methylene diphenylene diisocyanates selected from pure 4,4'-MDI, isomeric mixtures of 4,4'-MDI, 2,4'-MDI and less than 10% by weight of 2,2'-MDI, and modified variants of these diisocyanates containing carbodiimide, uretonimine, and/or urethane groups, like uretonimine and/or carbodiimide modified MDI having an NCO content of at least 20% by weight and urethane modified MDI obtained by reacting excess MDI and a low molecular weight polyol (molecular weight of up to 1000) and having an NCO content of at least 20% by weight.

Mixtures of the isocyanates mentioned above may be used if desired.

The polyisocyanate may, if desired, contain dispersed urea particles and/or urethane particles prepared in a conventional way, e.g. by adding a minor amount of an isophorone diamine to the polyisocyanate.

The most preferred polyisoycanate is a polyisocyanate containing at least 65%, preferably at least 80% and more preferably at least 95% by weight of 4,4'-diphenyl methane diisoycanate or a variant thereof. It may consist essentially of pure 4,4'-diphenyl methane diisocyanate or mixtures of that diisocyanate with one or more other organic polyisocyanates, especially other diphenyl methane diisocyanate isomers, for example the 2,4'-isomer optionally in conjunction with the 2,2'-isomer. The most preferred polyisocyanate may also be an MDI variant derived from a polyisocyanate composition containing at least 65% by weight of 4,4'-diphenylmethane diisocyanate. MDI variants are well known in the art and, for use in accordance with the invention, particularly include liquid (at 25°C) products obtained by introducing uretonimine and/or-carbodiimide groups into said polyisocyanates, such a carbodiimide and/or uretonimine modified polyisocyanate preferably having an NCO value of at least 20% by weight, and/or by reacting such a polyisocyanate with one or more polyols having a hydroxyl functionality of 2-6 and a molecular weight of 62-1000 so as to obtain a modified polyisocyanate, preferably having an NCO value of at least 20% by weight. Up to 25% by weight of another polyisocyanate may be used together with this most preferred polyisocyanate; preferred other polyisocyanates are polymeric MDI and toluene diisoycanate.

The reaction to prepare the polyurethane materials. except the hydrophilic foams. may be conducted at an NCO-index of 40-150 and preferably of 70-110. For the hydrophilic foams the NCO index may vary much wider in view of the large amount of water used.

The polyurethane materials may be prepared according to the one-shot method and the prepolymer method. According to the one-shot method the polyisocyanate, the polyether polyol having at least 50% by weight of oxyethylene groups and the other, optional ingredients are fed into the mould and reaction is allowed to take place in the mould; if desired the polyether polyol and the other, optional ingredients are premixed.

According to the prepolymer method part or all of the isocyanate-reactive compounds, except water if used, are pre-reacted with an excessive amount of polyisocyanate to prepare a urethane-containing, isocyanate-terminated prepolymer; the prepolymer so formed is reacted with the remaining isocyanate-reactive compounds and/or the water. An especially preferred embodiment of the present invention is the use of an isocyanate-terminated, urethane-containing prepolymer having an NCO value of 3-30 and preferably of 3-15% by weight in the process of the present invention, in particular when flexible polyurethane foams are made by using this prepolymer together with water. The prepolymer is an isocyanate-terminated, urethane-containing prepolymer made by reacting an excessive amount of a polyisocyanate containing at least 65% by weight of 4,4'-diphenylmethane diisocyanate or a variant thereof with a polyoxyethylene polyoxypropylene polyol having a number average nominal functionality of 2-4, a number average equivalent weight of 750-2500 and an oxyethylene content of 60-90% by weight.

The preparation of such prepolymers and the prepolymers are known in the art; see e.g. EP 547765. For the avoidance of doubt, in calculating the amount of polyether polyol having an oxyethylene content of at least 50% by weight in the polyurethane material, the amount of such polyol in a prepolymer is to be taken into account as well.

When such a prepolymer is used the flexible foam is prepared by reacting the prepolymer with water and optionally with further polyether polyol having an oxyethylene group content of at least 50% by weight and optionally with further isocyanate reactive ingredients and optionally in the presence of the described optional ingredients. The amount of water used is 0.8-5% by weight calculated on all other ingredients used. A small amount, up to 25% by weight calculated on the weight of the prepolymer, of another polyisocyanate may be used to prepare the flexible foams; preferably such other polyisocyanates are polymeric MDI and/or toluene diisocyanate.

The flexible foams may have apparent overall densities varying from 20 to 150 kg/m$^3$ (ISO 845).

The process may be conducted in any type of mould known in the art. Examples of such moulds are the moulds commercially used for making polyurethane furniture parts, automotive seating and automotive parts, like steering wheels, arm-rests and head-rests.

The material of the mould may be selected form those known in the art like metal, e.g. aluminium, and epoxy resin.

Step 1 of the process according to the invention may be conducted in any way known in the art. Applying an external mould release agent on the surfaces of a mould, which surfaces will be in contact with the ingredients used for making the material and/or with the material includes any way of applying such an agent to the surfaces, like rubbing, brushing, spraying and combinations thereof and applying any agent or agents intended to facilitate the later demoulding. One or more external mould release agents may be used or mixtures of external release agents.

The external mould release agents may be applied as such or as a solution, emulsion or dispersion in a liquid. The external mould release agents, applied in step 1, may be applied in one or more stages. Any external mould release agent known in the art may be applied; examples of suitable external mould release agents are Kluherpur 41-0039 and 41-0061 (both from Kluber Chemie), Desmotrol D-10RT from Productos Concentrol S.A., Acmosil 180 STBH from Fuller and Johnson Cire 103 from Johnson and Johnson.

Further it was surprisingly found that flexible polyurethane foams, prepared as described hereinbefore and having a relatively high density, show an extraordinary combination of properties. Therefore the present invention is further concerned with a moulded flexible polyurethane foam having an apparent overall density of 55-150 and preferably of 55-100 kg/m$^3$, a vibration transmissibility at resonance frequency of 1.5-3.2, a resonance frequency between 2.6 and 3.4 Hz and a hardness at an indentation load deflection (ILD of 25%) of 15-25 kg and comprising oxyethylene and oxypropylene groups in a weight ratio of 1:1 to 8:1 and oxyethylene groups in an amount of 25-80% by weight, calculated on the weight of the foam.

Such foams have a vibration transmissibility at 6 Hz of 0.3-0.9, a resilience of 55-80% and preferably an amount of oxyethylene groups of 35-75% by weight.

The density, vibration transmissibility at resonance frequency and at 6 Hz, the resonance frequency. hardness and resilience are measured as follows :

    density, kg/m$^3$ : ISO 845
    vibration transmissibility at resonance frequency : JASO B407-82
    vibration transmissibility at 6 Hz : JASO B407-82
    resonance frequency : JASO B407-82
    hardness, ILD of 25%, kg : ISO 2439:1977 (E)
    resilience, % : ISO 8307:1990 (E)

This JASO test B 407-82 is conducted at 23°C and a relative humidity of 50%. using a sample of 450x450x1000 mm and an indentor of the Tekken type which indentor has a weight of 50 kg.

These foams preferably are prepared by using the most preferred polyisocyanates and polyols mentioned hereinbefore.

Foams having a resonance frequency below 3.5 Hz have been disclosed in EP 394487; however such foams contain a high amount of oxypropylene groups.

The present invention is illustrated by the following examples.

Example 1

A moulded flexible polyurethane foam was made in a metal mould (internal dimensions 30x30x7 cm). The parts of the mould which will be in contact with the ingredients for making the foam and/or with the foam were first rubbed with Johnson Cire 103 (a wax obtainable from Johnson and Johnson) and then sprayed with Kluberpur 41-0039 (an external mould release agent obtainable from Klüber Chemie).

The following ingredients were used for preparing the foam

- polyol 1 : a random polyoxyethylene polyoxypropylene polyol having a nominal functionality of 3, an oxyethylene content of about 77 % by weight and a molecular weight of about 4000;
- Suprasec™ MPR from Huntsman Polyurethanes, Suprasec us a trademark of Huntsman ICI Chemicals LLC.
- Niax A1, an amine catalyst from OSi; and
- water.

First a prepolymer was made by reacting 70 parts by weight of polyol 1 and 30 pbw of Suprasec™ MPR containing 40 ppm of thionylchloride. The prepolymer had an NCO value of 7.8% by weight.
86.7 pbw of this prepolymer and a mixture consisting of 11.8 pbw of polyol 1, 0.15 pbw of Niax A 1 and 1.38 pbw of water were hand mixed in a cup (3000 rpm for 7 seconds) and this mixture was poured into the mould: total amount of the mixture was 495 grams. The mould was closed and the ingredients were allowed to react (mould temperature 45°C). 6 minutes after closing the mould, the mould was opened and the foam was removed. Immediately after removal of the foam and without any treatment of the mould, the same amount of ingredients (prepolymer, Polyol 1, Niax A1 and water) were poured into the mould as above, the mould was closed, the ingredients were allowed to react and the foam was demoulded after the same moulding time; this procedure was repeated 50 times. Then the experiment was voluntarily stopped. In total 52 moulded flexible polyurethane foams were made; all foams could be demoulded easily and without any damage to the foam. The foams obtained had an apparent overall density of about 75 kg/m$^3$ (ISO 845).

Example 2

Example 1 was repeated with the following ingredients with the proviso that the mould was used without treatment with Johnson Cire 103 and Kluberpur 41-0039; the mould was used as it was after the 52 mouldings in example 1 were made.
Ingredients :

- Suprasec™ 2010 ex Huntsman Polyurethanes
- polyol 1
- 2-methyl-propane-1,3-diol (MP)
- Dabco-DC-2 (catalyst from Air Products)

62.4 pbw of polyol 1, 6.9 pbw of MP and 0.14 pbw of DC2 were blended.

This blend was mixed as in example 1 with 30.5 pbw of Suprasec™ 2010. Moulded materials were made as in example 1, with the exception that the mould was not closed. 16 mouldings were made without using any external mould release agent. All mouldings could be removed easily and without damage.

Example 3

Foams made in a similar way as in example 1 had the following physical properties :

Apparent overall density : 71 kg/m$^3$ (ISO 845)
Vibration transmissibility at resonance frequency : 1.99 (JASO B407-82)
Resonance frequency : 3.08 Hz (JASO B407-82)
Hardness (ILD of 25%) : 20 kg (ISO 2439:1977 (E))
Resilience : 64% (ISO 8307:1990 (E))
Compression set at 50%, dry : 3% (ISO 1856)
Compression set at 50%, humid : -1.7% (TSM 7100)
Vibration transmissibility at 6 Hz : 0.73 (JASO B407-82)

**Claims**

1. Process for preparing a polyurethane material in a mould in which process the following steps are conducted :

   1. an external mould release agent is applied onto at least those surfaces of the mould which will be in contact with the ingredients used for preparing the polyurethane material and/or the finished polyurethane material;
   2. the ingredients to be used for preparing the polyurethane material are fed into the mould;
   3. the ingredients are allowed to react and to form the polyurethane material;
   4. the polyurethane material so formed is removed from the mould and
   5. steps 2,3 and 4 are repeated at least 10 times without repeating step 1, wherein at least 25% by weight of the ingredients used to make the polyurethane material, excluding water in this calculation if used, consist of polyether polyol having an average nominal functionality of 2-6, an average equivalent weight of 500-5000 and an oxyethylene content of at least 50% by weight.

2. Process according to claim 1 wherein steps 2, 3 and 4 are repeated at least 15 times without repeating step 1.

3. Process according to claim 1 wherein steps 2, 3 and 4 are repeated at least 25 times without repeating step 1.

4. Process according to claims 1-3 wherein a flexible polyurethane foam is prepared comprising reacting a polyisocyanate, the polyether polyol and water.

5. Process according to claims 1-3 wherein the ingredients comprise : 1) an isocyanate-terminated, urethane-containing prepolymer made by reacting an excessive amount of a polyisocyanate containing at least 65% by weight of 4,4'-diphenylmethane diisocyanate or a variant thereof with a polyoxyethylene polyoxypropylene polyol having a number average nominal functionality of 2-4, a number average equivalent weight of 750-2500 and an oxyethylene content of 60-90% by weight, the prepolymer having an NCO value of 3-15% by weight; and 2) water.

6. Process according to claims 4-5 wherein the amount of water is 0.8-5% by weight calculated on all ingredients used.

7. Process according to claims 4-6, wherein the amount of the polyether polyol having at least 50% by weight of oxyethylene groups is at least 50% by weight calculated on all ingredients used.

8. Process according to claims 4-7 wherein the reaction is conducted at an NCO index of 40-150.

9. Process according to claim 8 wherein the index is 70-110.

10. Process according to claims 1-9 wherein step 1 is repeated after one week.

11. Process according to claims 1-9 wherein step 1 is repeated after 24 hours.

12. Process according to claims 1-9 wherein step 1 is repeated after 8 hours.

13. Process according to claims 1-12 wherein the material of the mould is selected from metal and epoxy resin.

14. Moulded flexible polyurethane foam having an apparent overall density of 55-150 kg/m$^3$, a vibration transmissibility at resonance frequency of 1.5-3.2, a resonance frequency between 2.6 and 3.4 Hz, a vibration transmissibility at 6 Hz of 0.3-0.9, a resilience of 55-80% and a hardness (ILD of 25%) of 15-25 kg and comprising oxyethylene and oxypropylene groups in a weight ratio of 1:1 to 8:1 and oxyethylene groups in an amount of 25-80% by weight calculated on the weight of the foam.

**15.** Foam according to claim 14 wherein the amount of oxyethylene groups is 35-75% by weight.

## Patentansprüche

**1.** Verfahren zur Herstellung einer Polyurethanmasse in einer Gussform, wobei in dem Verfahren die folgenden Schritte ausgeführt werden:

1) ein Außenformtrennmittel wird auf wenigstens die Oberflächen der Gussform, die mit den für die Herstellung verwendeten Inhaltsstoffen und/oder der fertigen Polyurethanmasse in Kontakt stehen werden, aufgebracht;
2) die für die Herstellung der Polyurethanmasse verwendeten Inhaltsstoffe werden in die Gussform gegeben;
3) man lässt die Inhaltsstoffe reagieren und die Polyurethanmasse sich bilden;
4) die so hergestellte Polyurethanmasse wird aus der Gussform entfernt; und
5) die Schritte 2), 3) und 4) werden wenigstens 10 mal, ohne Schritt 1) zu wiederholen, wiederholt,

wobei wenigstens 25 Gew.-% der Inhaltsstoffe, die zur Herstellung der Polyurethanmasse verwendet werden, wobei Wasser, wenn es verwendet wird, von dieser Berechnung ausgenommen wird, aus einem Polyetherpolyol mit einer durchschnittlichen nominalen Funktionalität von 2-6, einem durchschnittlichen Äquivalentgewicht von 500-5000 und einem Oxyethylengehalt von wenigstens 50 Gew.-% bestehen.

**2.** Verfahren gemäß Anspruch 1, wobei die Schritte 2), 3) und 4) wenigstens 15 mal, ohne Schritt 1) zu wiederholen, wiederholt werden.

**3.** Verfahren gemäß Anspruch 1, wobei die Schritte 2), 3) und 4) wenigstens 25 mal, ohne Schritt 1) zu wiederholen, wiederholt werden.

**4.** Verfahren gemäß den Ansprüchen 1-3, wobei ein flexibler Polyurethanschaum hergestellt wird, der die Umsetzung eines Polyisocyanats, des Polyetherpolyols und Wasser umfasst.

**5.** Verfahren gemäß den Ansprüchen 1-3, wobei die Inhaltsstoffe umfassen: 1) ein Urethan enthaltendes Prepolymer mit endständigem Isocyanat, das durch Umsetzen einer überschüssigen Menge eines Polyisocyanats, das wenigstens 65 Gew.-% 4,4-Diphenylmethandiisocyanat oder eine Variante davon enthält, mit einem Polyoxyethylen-Polyoxypropylenpolyol mit einer zahlenmittleren nominalen Funktionalität von 2-4, einem zahlenmittleren Äquivalentgewicht von 750-2500 und einem Oxyethylengehalt von 60-90 Gew.-%, wobei das Prepolymer einen NCO Wert von 3-15 Gew.-% hat, hergestellt wird; und 2) Wasser.

**6.** Verfahren gemäß den Ansprüchen 4-5, wobei die Wassermenge 0.8-5 Gew.-%, berechnet auf alle verwendeten Inhaltsstoffe, ist.

**7.** Verfahren gemäß den Ansprüchen 4-6, wobei die Menge des Polyetherpolyols mit wenigstens 50 Gew.-% Oxyethylengruppen wenigstens 50 Gew.-%, berechnet auf alle verwendeten Inhaltsstoffe, ist.

**8.** Verfahren gemäß den Ansprüchen 4-7, wobei die Reaktion mit einem NCO Index von 40-150 ausgeführt wird.

**9.** Verfahren gemäß Anspruch 8, wobei der Index 70-110 ist.

**10.** Verfahren gemäß den Ansprüchen 1-9, wobei Schritt 1) nach einer Woche wiederholt wird.

**11.** Verfahren gemäß den Ansprüchen 1-9, wobei Schritt 1) nach 24 Stunden wiederholt wird.

**12.** Verfahren gemäß den Ansprüchen 1-9, wobei Schritt 1) nach 8 Stunden wiederholt wird.

**13.** Verfahren gemäß den Ansprüchen 1-12, wobei das Gussformmaterial aus Metall und Epoxidharz ausgewählt wird.

**14.** Ein flexibler Polyurethanformschaum mit einer Durchschnitts-Rohdichte von 55-150 kg/m$^3$, einer Vibrationsdurchlässigkeit von 1.5-3.2 bei einer Resonanzfrequenz, einer Resonanzfrequenz zwischen 2.6 und 3.4 Hz, einer Vibrationsdurchlässigkeit bei 6 Hz von 0.3-0.9, einer Elastizität von 55-80% und einer Härte (ILD von 25%) von 15-25 kg und mit Oxyethylen- und Oxypropylengruppen in einem Gewichtsverhältnis von 1:1 zu 8:1 und mit Oxyethylengruppen in einer Menge von 25-80 Gew.-%, berechnet auf das Gesamtgewicht des Schaums.

**15.** Der Schaum gemäß Anspruch 14, wobei die Menge der Oxyethylengruppen 35-75 Gew.-% ist.

## Revendications

**1.** Procédé de préparation d'un matériau en polyuréthanne dans un moule, procédé dans lequel on exécute les étapes suivantes :

1. un agent de démoulage externe est appliqué au moins sur les surfaces du moule qui doivent entrer en contact avec les ingrédients utilisés pour préparer le matériau en polyuréthanne et/ou avec le matériau en polyuréthanne fini ;

2. les ingrédients à utiliser pour préparer le matériau en polyuréthanne sont introduits dans le moule ;

3. les ingrédients sont amenés à réagir et à former le matériau en polyuréthanne ;

4. le matériau en polyuréthanne ainsi formé est retiré du moule et

5. les étapes 2, 3 et 4 sont répétées au moins 10 fois sans répéter l'étape 1,

dans lequel au moins 25 % en poids des ingrédients utilisés pour former le matériau en polyuréthanne, en excluant l'eau de ce calcul si l'on en utilise, consistent en polyéther-polyol ayant une fonctionnalité nominale moyenne de 2 à 6, un poids d'équivalent moyen de 500 à 5000 et une teneur en groupes oxyéthylène d'au moins 50 % en poids.

2. Procédé selon la revendication 1, dans lequel les étapes 2, 3 et 4 sont répétées au moins 15 fois sans répéter l'étape 1.

3. Procédé selon la revendication 1, dans lequel les étapes 2, 3 et 4 sont répétées au moins 25 fois sans répéter l'étape 1.

4. Procédé selon les revendications 1 à 3, dans lequel une mousse souple de polyuréthanne est préparée, comprenant la réaction d'un polyisocyanate, du polyéther-polyol et d'eau.

5. Procédé selon les revendications 1 à 3, dans lequel les ingrédients comprennent : 1) un prépolymère contenant des groupes uréthanne terminé par des groupes isocyanate, formé en faisant réagir un excès d'un polyisocyanate contenant au moins 65 % en poids de diisocyanate de 4,4'-diphénylméthane ou une de ses variantes, avec un polyoxyéthylène-polyoxypropylène-polyol ayant une fonctionnalité nominale moyenne en nombre de 2 à 4, un poids d'équivalent moyen en nombre de 750 à 2500 et une teneur en groupes oxyéthylène de 60 à 90 % en poids, le prépolymère ayant un indice de NCO de 3 à 15 % en poids ; et 2) de l'eau.

6. Procédé selon les revendications 4 et 5, dans lequel la quantité d'eau est de 0,8 à 5 % en poids, calculée par rapport à tous les ingrédients utilisés.

7. Procédé selon les revendications 4 à 6, dans lequel la quantité du polyéther-polyol ayant au moins 50 % en poids de groupes oxyéthylène est d'au moins 50 % en poids, calculée par rapport à tous les ingrédients utilisés.

8. Procédé selon les revendications 4 à 7, dans lequel la réaction est conduite à un indice de NCO de 40 à 150.

9. Procédé selon la revendication 8, dans lequel l'indice est de 70 à 110.

10. Procédé selon les revendications 1 à 9, dans lequel l'étape 1 est répétée après une semaine.

11. Procédé selon les revendications 1 à 9, dans lequel l'étape 1 est répétée après 24 heures.

12. Procédé selon les revendications 1 à 9, dans lequel l'étape 1 est répétée après 8 heures.

13. Procédé selon les revendications 1 à 12, dans lequel le matériau du moule est choisi parmi un métal et une résine époxy.

14. Mousse de polyuréthanne souple moulée ayant une masse volumique apparente globale de 55 à 150 kg/m$^3$, une transmissibilité de vibration à la fréquence de résonance de 1,5 à 3,2, une fréquence de résonance comprise entre 2,6 et 3,4 Hz, une transmissibilité de vibration à 6 Hz de 0,3 à 0,9, une résilience de 55 à 80 % et une dureté (ILD de 25 %) de 15 à 25 kg et comprenant des groupes oxyéthylène et oxypropylène en un rapport en poids de 1:1 à 8:1 et des groupes oxyéthylène en une quantité de 25 à 80 % en poids, calculée par rapport au poids de la mousse.

15. Mousse selon la revendication 14, dans laquelle la quantité de groupes oxyéthylène est de 35 à 75 % en poids.